# EUROPÄISCHE PATENTANMELDUNG

(11) **EP 3 123 871 A1**
(43) Veröffentlichungstag der Anmeldung: **01.02.2017**
(21) Anmeldenummer: 15193634.1
(22) Anmeldetag: 09.11.2015
(51) Int. Cl.: A23J 1/14, A23J 3/14

(54) **MECHANISCHE LUPINEN-PROTEINEXTRAKTION**

(30) Priorität: 30.07.2015 EP 15179127
(71) Anmelder: Lupino AG Deutschland, 15749 Mittenwalde (DE)
(72) Erfinder: Kloth, Gerhard, 18317 Saal Neuendorf (DE); Eckert, Hagen, 15711 Königs Wusterhausen (DE)
(74) Vertreter: Hertin und Partner Rechts- und Patentanwälte PartG mbB

(57) **Zusammenfassung**

Die vorliegende Erfindung betrifft ein Verfahren zur Herstellung eines pflanzlichen Prateinpräparates umfassend zumindest die Schritte des Einmaischens geschälter Pflanzensamen, Dekantierens der so erhaltenen Maische zum Abtrennen von Pflanzenfasern, Abtrennens von Alkaloiden und niedermolekularen Zuckern durch Diafiltration und des Aufkonzentrierens der so erhaltenen Proteinlösung mittels Ultrafiltration. Die Erfindung betrifft außerdem ein so hergestelltes pflanzliches Proteinpräparat.

## Beschreibung

### Zusammenfassung

Die vorliegende Erfindung betrifft ein Verfahren zur Herstellung eines pflanzlichen Proteinpräparates umfassend zumindest die Schritte des Einmaischens geschälter Pflanzensamen, Dekantierens der so erhaltenen Maische zum Abtrennen von Pflanzenfasern, Abtrennens von Alkaloiden und niedermolekularen Zuckern durch Diafiltration und des Aufkonzentrierens der so erhaltenen Proteinlösung mittels Ultrafiltration. Die Erfindung betrifft außerdem ein so hergestelltes pflanzliches Proteinpräparat.

### Hintergrund

Die zu den Leguminosen gehörende Lupine zeichnet sich durch einen besonders hohen Anteil an ernährungsphysiologisch hochwertigem Protein aus. Die nahezu 4000 Jahre alte Pflanze leistet außerdem einen wichtigen Beitrag zur Verbesserung der Bodenkultur insbesondere auch auf sandigen Böden. Das funktionelle pflanzliche Proteinprodukt der Lupinen kann in verschiedenen Bereichen der Lebensmittelindustrie eingesetzt werden. Das Produkt zeichnet sich durch einen ausgewogenen Geschmack, natürliche Farben und Vollmundigkeit aus. Außerdem verfügt es über emulgierende Eigenschaften, wodurch es in vielen Lebensmitteln tierische Proteine wie z.B. Hühnerei oder Milchproteine ersetzen kann.

Die Verwendung von pflanzlichen Proteinen als Grundstoff für die Herstellung von vegetarischen und veganen Lebensmitteln gewinnt zunehmend an Bedeutung.

Im Stand der Technik ist die WO 2008/089735 bekannt. Hier wird ein Verfahren zur Herstellung von Proteinpräparaten aus Lupinensamen beschrieben, wobei die Pflanzenproteine durch Zugabe von Säure aus einer Lösung ausgefällt werden. Dies erfolgt bei einem pH-Wert von < 5.

Im Stand der Technik werden Proteinextrakte aus Pflanzen z.B. aus Lupinen über aufwendige Verfahren hergestellt bzw. gewonnen. Im Stand der Technik sind Verfahren bekannt, bei denen Lupinsamen zunächst geschält und entfettet werden. Die Samen werden danach bei einem pH von etwa 4,5 eingemaischt. Um den sauren pH-Wert einzustellen, wird üblicherweise Salzsäure verwendet. Die Salzsäure kann dabei allerdings zu unerwünschten und schädlichen Nebenprodukten führen, die als Rückstände im Endprodukt möglicherweise noch enthalten sind. Durch einen Schritt des Dekantierens werden Zucker und Alkaloide abgetrennt. Anschließend wird die so erhaltene Lösung wieder neutralisiert. Dies erfolgt über Zugabe von NaOH. NaOH muss in großen Mengen hinzugegeben werden, um den pH-Wert wieder in den neutralen Bereich zu bringen. Im Anschluss werden Faserbestandteile durch einen Schritt des Dekantierens abgetrennt. Daran anschließend muss der pH-Wert erneut auf 4,5 eingestellt werden. Dadurch wird das Protein ausgefällt und durch Separatoren vom wässrigen Überstand abgetrennt. Hierzu ist wieder das Hinzufügen von größeren Mengen an Salzsäure notwendig. Am Ende des Verfahrens wird mit NaOH neutralisiert und so das Proteinextrakt gewonnen.

Diese Verfahren arbeiten mit dem Ausfällen von gelösten Pflanzenproteinen durch die Zugabe von Säure in großen Mengen um so den isoelektrischen Punkt einzustellen. Die ausgefällten Pflanzenproteine können dann abgetrennt werden.

Nachteilig an diesen Verfahren aus dem Stand der Technik ist vor allem der Einsatz der Säuren, welcher sogar mehrfach erfolgt. Hierbei kann es zur Bildung von unerwünschten Nebenprodukten kommen. Außerdem sind großen Mengen an NaOH-Lösung nötig, um das Proteinextrakt wieder zu neutralisieren.

Ein weiterer Nachteil der Verfahren aus dem Stand der Technik ist, dass diese nicht als kontinuierliche Verfahren arbeiten, was besonders aufwändig ist und zusätzliche Zeit kostet.

Im Stand der Technik sind außerdem Proteinextraktionsverfahren aus Pflanzen bestandteilen bekannt, bei denen vor allem gut emulgierende Proteine extrahiert werden. Diese Proteine dienen unter anderem zur Herstellung von pflanzlichen Eiscremepräparaten oder ähnlichen Produkten. Bei den Verfahren im Stand der Technik werden üblicherweise Pflanzenöle zu den Pflanzenteilen in einer wässrigen Mischung hinzugegeben. In der DE 102006002249 wird zum Beispiel ein Verfahren zur Herstellung von Proteinen für die Speiseeisherstellung offenbart. Es soll hierbei die Gewinnung einer pflanzlichen Proteinfraktion mit besonders guten Emulgiereigenschaften erzielt werden. Durch das Hinzugeben von Pflanzenölen entsteht eine lipophile Grenzfläche an der sich dispergierte Proteine mit lipophilen Eigenschaften besonders gut anlagern können. Somit werden speziell öllösliche Proteine extrahiert. Nachteilig an diesem Verfahren ist, dass andere Proteinfraktionen verloren gehen.

Es war daher die Aufgabe der Erfindung, das Verfahren aus dem Stand der Technik zu verbessern und den Einsatz von Säuren weitgehend bis vollständig zu vermeiden.

### Beschreibung der Erfindung

Die Aufgabe wird gelöst durch die Ausführungsform der unabhängigen Ansprüche. Bevorzugte Ausführungsformen befinden sich in den abhängigen Ansprüchen.

In einer ersten bevorzugten Ausführungsform betrifft die Erfindung ein Verfahren zur Herstellung eines pflanzlichen Proteinpräparates umfassend zumindest die folgenden Schritte:
a) Einmaischen von Pflanzenteilen, bevorzugt geschälter Pflanzensamen,
b) Dekantieren der so erhaltenen Maische zum Abtrennen von Pflanzenfasern,
c) Abtrennen von Alkaloiden und niedermolekularen Zuckern durch Diafiltration,
d) Aufkonzentrieren der so erhaltenen Proteinlösung mittels Ultrafiltration.

Bei dem erfindungsgemäßen Verfahren handelt es sich bevorzugt um ein Verfahren der neutralen wässrigen Extraktion. Das Verfahren arbeitet mit mechanischen Abtrennungen, wobei die Einstellung eines isoelektrischen Punktes zur Proteinfällung nicht notwendig ist. Es war überraschend, dass eine neutrale Extraktion sogar eine verbesserte Proteinausbeute im Vergleich zu herkömmlichen Verfahren erzielt. Dieses Verfahren ist somit auch geeignet ein bio-zertifizierfähiges Lupinenprotein- Extrakt herzustellen. Dies ist im Stand der Technik nicht möglich.

Ein Vorteil der vorliegenden Erfindung ist, dass durch das erfindungsgemäße Verfahren sämtliche Proteinfraktionen extrahiert werden können. Eine spezielle Extraktion von gut emulgierenden Proteinen ist für die vorliegende Erfindung nicht notwendig, bzw. sogar nachteilig, weil dadurch wichtige Proteinfraktionen verloren gehen. Ein Vorteil der vorliegenden Erfindung liegt gerade darin, dass sowohl die hochmolekularen Alpha- Conglutin und Beta-Conglutin Fraktionen aber auch die niedermolekularen und sauerlöslichen Fraktionen Gamma- Conglutin und Delta- Conglutin durch das Verfahren gewonnen werden. Die herkömmlichen Verfahren aus dem Stand der Technik stellen hingegen weitestgehend Lösungen zur Extraktion der Alpha und Beta-Fraktionen bereit, wobei die Gamma- und Delta-Fraktionen verloren gehen.

Insbesondere in Hinblick auf die Bioaktivität und des damit verbundenen gesundheitlichen Nutzens der Lupinenproteine ist die Gamma-Conglutin Fraktion (schwefelreiches Glykoprotein) von besonderer Bedeutung. Die Gamma- Conglutin Fraktion zeichnet demnach für die positive Beeinflussung des Cholesterinspiegels im Blut, für die Reduzierung von Bluthochdruck und für die präventive Wirkung gegenüber Diabetes II verantwortlich.

Es ist bevorzugt, dass die Pflanzenteile, z.B. Pflanzensamen, bevorzugt die Lupinensamen, zunächst mechanisch aufbereitet werden. Hierzu gehört bevorzugt das Entfernen der Schale sowie das Zerkleinern der Kerne. Hierbei wird das Ziel verfolgt, die Zellwände aufzuschließen, um die spätere Löslichkeit der Zellinhaltsstoffe, vor allem der Speicherproteine, zu unterstützen. Das Schälen der Pflanzensamen erfolgt zum Beispiel mittels Prall- und/oder Unterläuferschälgang. Durch diese Methoden platzt die Schale der Samen auf und die Kerne werden freigesetzt. Das Trennen von Schalen und Kernen erfolgt bevorzugt im Sichter unter Ausnutzung des unterschiedlichen spezifischen Gewichtes der beiden Fraktionen.

Die Samenkerne, zum Beispiel Lupinenkerne, bevorzugt die geschälten und/oder zerkleinerten Lupinenkerne werden in einem ersten Schritt eingeweicht. Dieses Einweichen findet vorzugsweise in Wasser statt, besonders bevorzugt in Trinkwasser. Das Einweichen kann auch als Anmaischen bezeichnet werden.

Der pH-Wert dieses Gemisches liegt bei etwa pH 6. Dieser natürliche pH-Wert soll in etwa auf den neutralen pH-Wert 7 angehoben werden. Dies kann durch die Zugabe von Säureregulatoren wie z. B. Natronlauge oder Kalkmilch erfolgen. Natronlauge und Kalkmilch können in Form des Lebensmittelzusatzstoffes E 524 bzw. E526 hinzugegeben werden. Die Menge der hinzugegebenen Natronlauge ist dabei nicht vergleichbar mit den Mengen, die im Stand der Technik notwendig sind, um die sauren Lösungen wieder zu neutralisieren. Es reichen sehr kleine Mengen Natronlauge, um den pH-Wert auf ca. pH 7 anzuheben. Bevorzugt werden 2 g bis 20 g besonders bevorzugt etwa 5 g NaOH pro kg Lupinensamen eingesetzt. Es ist auch bevorzugt, dass 20 ml bis 60 ml, besonders bevorzugt ca. 42 ml einer Natronlauge verwendet werden, wobei die Natronlauge eine NaOH Konzentration von 2 bis 6 mol/l besonders bevorzugt 3 mol/l aufweist.

Im Anschluss wird die Maische bevorzugt in einen Rührwerksbehälter überführt. Ein solcher Rührwerksbehälter verfügt bevorzugt über spezielle Rührwerksorgane, die ein schaumarmes Rühren realisieren. Das Einmaischen findet unter intensiven Rührens statt. Bevorzugt wird das Rühren mittels eines Leitstrahlmischers umgesetzt. Dies hat das Ziel, eine homogene Suspension zu erzeugen. Es ist dabei bevorzugt, dass während des Anmaischens die Natronlauge bei intensivstem Rühren zugegeben wird um den neutralen pH- Wert 7 einzustellen. Bevorzugt ist eine Verweilzeit von 10 min bis 50 min. Dabei haben sich 15 min Verweilzeit sich als optimal bewährt. Danach folgt die Extraktion im Rührwerksbehälter. Diese finden bevorzugt bei einer Verweilzeit von 30 bis 120 min, bevorzugt 60 min bei pH 7 und Temperatur < 10°C, besonders bevorzugt unter 4°C statt. Um Schaumbildung zu vermeiden und dennoch eine Stabilisierung der Suspension (Vermeiden des Absetzens von Feststoff) zu gewährleisten hat sich ein leichtes Rühren mit unter 100 U/min, bevorzugt ca. 33 U/min als vorteilhaft erwiesen.

In einer bevorzugten Ausführungsform der Erfindung handelt es sich um einen besonders schonenden Rührvorgang, der nicht zur Dispersion führt. Durch das Rühren wird lediglich eine Suspension erreicht, ohne dass durch große Scherkräfte Öltröpfchen entstehen. Ziel ist nicht, dass sich lipophile oder amphiphile Gruppen der Proteine an erzeugte Öltröpfchen anlagern, weshalb das Öl der Pflanzenteile nicht in Tropfenform vorliegen muss. Das Rühren im Sinne der Erfindung dient der Herstellung einer Suspension, weshalb entsprechendes Rührwerkzeug zu wählen ist. Ein Fachmann auf dem Gebiet des Standes der Technik weiß, mit welchen Werkzeugen dies erreicht werden kann, ohne dabei selbst erfinderisch tätig zu werden.

Im Anschluss wird die Suspension in eine feste faserhaltige und eine flüssige proteinreiche Fraktion getrennt. Dies erfolgt bevorzugt mittels einer Vollmantelzentrifuge. Die Vollmantelzentrifuge wird auch Dekanter genannt, weshalb der Schritt auch als Dekantieren bezeichnet wird.

Folgend werden niedermolekulare Substanzen, vor allem Alkaloide und Zucker, durch Diafiltration abgetrennt. Dies erfolgt unter Ausnutzung der unterschiedlichen Molekulargewichte mit dem Ziel, eine Proteinlösung mit mindestens 50%, bevorzugt mindestens 70%, besonders bevorzugt mindestens 80% Protein in der Trockenmasse zu erhalten. Durch Ultrafiltration wird die Proteinlösung weiter aufkonzentriert.

Das Haltbarmachen des Proteinextraktes erfolgt bevorzugt durch schonende Pasteurisierung. Dies hat den Vorteil, dass das gesamte funktionelle Profil erhalten bleibt.

Das erfindungsgemäße Verfahren zeichnet sich dadurch aus, dass eine mechanische Extraktion verwendet wird, die weitgehend bei pH neutralem Milieu arbeitet. Es hat sich gezeigt, dass durch das Verfahren der Erfindung eine besonders hohe Qualität an Proteinpräparaten erhalten werden kann. Für das erfindungsgemäße Verfahren ist es nicht notwendig, dass die Pflanzensamen entfettet werden. Es hat sich überraschenderweise gezeigt, dass sich ein zurückbleibender Fettgehalt im Proteinpräparat nicht nachteilig auswirkt. Die Fachwelt ist davon ausgegangen, dass Fette in den pflanzlichen Proteinpräparaten nachteilig für die Haltbarkeit und den Geschmack des Präparats sind. Dieses Vorurteil konnte nicht bestätigt werden.

In einer weiteren bevorzugten Ausführungsform können die Pflanzensamen auch entfettet werden, bevor das Extraktionsverfahren durchgeführt wird. Die dabei gewonnen Proteinpräparte haben bevorzugt einen Fettgehalt von weniger von als 5%, bevorzugt weniger als 2%. Zum Entfetten kommen gängige Methoden aus dem Stand der Technik in Betracht. Ein Fachmann weiß, wie diese Methoden in das vorliegende Verfahren integriert bzw. dem vorgeschaltet werden können, ohne dabei selbst erfinderisch tätig zu werden.

Es ist bevorzugt, dass das pflanzliche Proteinpräparat ein Lupinenprotein-Extrakt ist und die Pflanzensamen Lupinensamen sind.

Es ist bevorzugt, dass die erfindungsgemäßen pflanzlichen Proteinpräparate aus Lupinen, Soja, Reis, Weizen, Sonnenblume, Flachssaaten, Leinsaaten, Hanf und/oder Erbsen gewonnen werden. Besonders bevorzugt werden die Samen der weißen, der gelben und der blauen Süßlupine und/oder der Andenlupine verwendet. Ganz besonders bevorzugt wird die Blaue Süßlupine *Lupinus angustifolius* verwendet, die sich durch einen vorteilhaft hohen Rohproteingehalt auszeichnet.

Besonders bevorzugt werden Pflanzensamen gekennzeichnet durch die folgenden Parameter verwendet. Das Tausendkorngewicht (TKG) der Pflanzensamen beträgt bevorzugt 120 g - 180 g. Außerdem eignen sich vor allem solche Samen, die einen Korndurchmesser von 2 mm - 15 mm, besonders bevorzugt 3 mm - 7 mm und eine Schalendicke 100 µm - 230 µm aufweisen. Der Schalenanteil der Samen beträgt vorzugsweise zwischen 20% und 35%, besonders bevorzugt zwischen 24% und 30%. Außerdem werden bevorzugt solche Samen verwendet, die eine Restfeuchte von 10% bis 16%, besonders bevorzugt 12% bis 14% aufweisen. Der Fettgehalt der bevorzugt verwendeten Samen liegt zwischen 5% und 7%, während der Proteingehalt bevorzugt größer als 30% ist. Der Besatz liegt vorzugsweise unter 2%, mit einem bevorzugten Alkaloidgehalt von unter 0,02%.

Lupinensamen ähneln in ihrer Zusammensetzung den Sojabohnen. Sie verfügen über einen Eiweißanteil von 35 bis 50% und weisen alle unentbehrlichen Aminosäuren auf. Vor allem die Aminosäure Lysin kommt in den meisten Getreidesorten nicht vor, weshalb das Lupinen-Eiweiß besonders hochwertig ist. Der Fettgehalt liegt bei vier bis sieben Prozent, womit die Süß-Lupinen deutlich fettärmer sind als Sojabohnen.

Das Fett besteht zu einem großen Anteil aus einfach und mehrfach ungesättigten Fettsäuren, die besonders wertvoll für den menschlichen Organismus sind. Da die Lupinensamen gleichzeitig reichlich Carotinoide und Vitamin E liefern, sind diese Fettsäuren gut vor Oxidation geschützt. Außerdem ist die Süßlupine glutenfrei und weißt keine oder nahezu keine Stärke auf. Lupinen sind ein guter Lieferant für Mineralstoffe und Spurenelemente, vor allem von Kalium, Calcium, Magnesium und Eisen. Außerdem sind reichlich sekundäre Pflanzenstoffe vorhanden, beispielsweise die Isoflavonoide Genistein und Daidzein, denen Wissenschaftler krebshemmende, antioxidative und antimikrobielle Wirkungen zuschreiben.

Im Vergleich zu anderen Hülsenfrüchten sind Lupinen besonders gut verträglich, da sie weniger blähende Substanzen enthalten. Ein weiterer Vorteil ist, insbesondere für Allergiker, dass sie ein geringeres allergenes Potenzial als Sojabohnen besitzen.

Ein Vorteil der Erfindung ist, dass die positiven Eigenschaften der Lupinensamen im gewonnen Proteinextrakt weitgehend noch erhalten bleiben.

Besonders bevorzugt ist, dass die geschälten Pflanzensamen vor dem Einmaischen aus Schritt a) zerkleinert werden. Es ist bevorzugt, dass die Pflanzensamen oder Pflanzenteile durch mahlen und/oder flockieren zerkleinert werden. In einer bevorzugten Ausführungsform werden die geschälten Pflanzensamen oder Pflanzenteile zwischen gekühlten Walzenstühlen zu Flocken mit einem Hektolitergewicht von 30 kg bis 50 kg, bevorzugt 38 kg bis 40 kg gepresst. Es ist bevorzugt, dass die Flocken auf eine Schichtdicke von < 0,5 mm gepresst werden. Es ist auch bevorzugt, dass die Pflanzensamen oder Pflanzenteile zu Mehl vermahlen werden.

Weiterhin bevorzugt ist, dass in dem Verfahren keine Säuren hinzugegeben werden. Im Stand der Technik ist das Hinzufügen von Säuren, vor allem Salzsäuren zum Einstellen des isoelektrischen Punktes vorgesehen. Dies ist besonders nachteilig, da hier große Mengen Säuren zu den Pflanzensamen hinzugegeben werden müssen. Gerade in der Lebensmittelindustrie ist es jedoch ein grundsätzliches Ziel, das Entstehen von schädlichen Produkten zu vermeiden.

Zum Beispiel konnte bei der Herstellung von Frischkäsepräparaten sich das durch das erfindungsgemäße Verfahren hergestellte Produkt durch eine natürlichere, angenehme Säure auszeichnen und zeigte einen verbesserten geschmacklichen Gesamteindruck verglichen mit dem säuregefällten Produkt aus dem Stand der Technik.

Durch das erfindungsgemäße Verfahren und den Verzicht auf das Verwenden von Salzsäure konnte die unerwünschte Denaturierung der Proteine verhindert werden. Durch die Verfahren aus dem Stand der Technik kommt es regelmäßig zur Zerstörung einzelner Aminosäuren (vor allem Tryptophan, Cystin, Serin, Threonin). Dies kann durch das erfindungsgemäße Verfahren effektiv verhindert werden, was die Qualität des Produktes erhöht.

Ein weiterer Nachteil der vor allem auf die Verwendung von Salzsäure im Stand der Technik zurückzuführen ist, stellt ein erhöhter Aschegehalt und damit vor allem ein erhöhter Salzgehalt dar.

Es war überraschend, dass durch das erfindungsgemäße Verfahren eine Erhöhung der Proteinlöslichkeit erzielt werden konnte, was die Weiterverarbeitung der Produkte erleichtert und neue Möglichkeiten schafft.

Ein weiterer Nachteil im Stand der Technik ist das mögliche Auftreten von unerwünschten Reaktionen zwischen Aminosäuren und Kohlenhydraten. Zum Beispiel führen unerwünschte Maillard-Reaktionen zu zahlreichen potentiell mutagen oder/und karzinogen wirkenden Verbindungen, die daher besonders nachteilig für Produkte in der Lebensmittelindustrie sind. Durch das erfindungsgemäße Verfahren können Maillard-Reaktionen vollständig verhindert werden, was einen deutlichen Vorteil gegenüber dem Stand der Technik darstellt.

Auch die Bildung unerwünschter, teilweise toxischer Stoffe, wie zum Beispiel Humin, über andere Reaktionswege kann mit dem erfindungsgemäßen Verfahren effektiv unterbunden werden.

Die Gefahr der Bildung von 3-MCPD (3-monochlorpropane-1,2-diol) wird ebenfalls durch das erfindungsgemäße Verfahren unterbunden. Die Substanz 3-MCPD kann entstehen, wenn fettund gleichzeitig salzhaltige Lebensmittel im Herstellungsprozess hohen Temperaturen ausgesetzt werden. Bei der Herstellung von Fetten und Ölen können sich beim Erhitzen auf hohe Temperaturen aus 3-Monochlorpropandiol 3-MCPD-Fettsäureester bilden. 3-MCPD wird als mögliches Humankarzinogen eingestuft und daher nachteilig in Produkten der Lebensmittel industrie.

Im erfindungsgemäßen Verfahren werden keine Säuren, und vor allem keine Salzsäure während des Verfahrens hinzugegeben. Die Pflanzensamen kommen daher während des erfindungsgemäßen Verfahrens nicht in Kontakt mit Säuren oder säurehaltigen Lösungen.

Es ist außerdem bevorzugt, dass der Schritt a) des Einmaischens
aa) Einweichen in Wasser und
bb) Verrühren
umfasst.

Weiterhin bevorzugt ist, dass die Pflanzensamen in Schritt aa) in Wasser, bevorzugt Trinkwasser, eingeweicht werden, mit einem Mischungsverhältnis von Feststoff zu Wasser von 1:5 - 1:12, bevorzugt 1:6 - 1:10, besonders bevorzugt 1:8. Es hat sich gezeigt, dass diese Mischungsverhältnisse zu besonders guten Ergebnissen führen. Hierbei werden die Pflanzensamen optimal eingeweicht und für das Abtrennen der einzelnen Bestandteile vorbereitet. Das Einweichen erfolgt bevorzugt in einem Anmaischebehälter mit Leitstrahlmischer. Dabei wird das Gemisch zu einer stabilen Suspension verrührt. Der Rührwerksbehälter verfügt bevorzugt über konische, geschlitzte Becherrührorgane, die ein schaumarmes Rühren bei geringer Umfangsgeschwindigkeit von ∼ 2,5 m/s gewährleisten. Die konusförmigen Rührorgane erzeugen eigendynamische Wirbelbewegungen. Diese bewirken durch das sogenannte Düsenprinzip eine zusätzliche Beschleunigung und Vermischung des Rührgutes. Durch das Staudruckprinzip, bei dem das Medium laminar durch die Verdränger strömt, erfolgt ein äußerst schonendes Rühren.

Bevorzugt ist das Verfahren dadurch gekennzeichnet, dass das Einweichen in Schritt aa) bei einer Temperatur von 2°C - 10°C, bevorzugt 3°C - 6°C, besonders bevorzugt 4°C stattfindet. Es hat sich gezeigt, dass die Maische bei den bevorzugten Temperaturen die besten Ergebnisse liefert. Hier kann die größte Menge an Pflanzenfasern abgetrennt werden. Diese bevorzugten Temperaturen sind außerdem vorteilhaft, da ein positiver Effekt hinsichtlich der farblichen Beschaffenheit der Präparate erzielt werden konnte.

Es ist außerdem bevorzugt, dass der pH-Wert der Mischung aus Wasser und geschälten Pflanzensamen auf im Wesentlichen pH 7 eingestellt wird. Bei der Erfindungsgemäßen Methode handelt es sich bevorzugt um eine neutrale wässrige Extraktion. Daher ist es bevorzugt, dass der pH-Wert der Maische auf pH 7 eingestellt wird. Dies ist ohne das Hinzufügen von Säuren möglich und führt daher zu keinerlei Bildung von schädlichen Nebenprodukten. Das Einmaischen bei einem nahezu neutralen pH-Wert lieferte besonders gute Ergebnisse hinsichtlich der geschmacklichen Beschaffenheit des Präparats. In Vergleichstests wurde ein milderer Geschmack bestätigt.

Nach Erreichen einer homogenen Verteilung der Feststoffe und eines stabilen pH-Wert 7 wird die Suspension bevorzugt 60 min lang unter diesen Bedingungen gerührt. Die Proteinfraktionen gehen unter diesen Bedingungen in Lösung, werden somit aus den Zellen extrahiert.

Die Suspension wird im Anschluss bevorzugt über eine Vollmantelzentrifuge geleitet. Dabei werden Feststoff und proteinhaltige Flüssigkeit getrennt. Die Dekantereinstellungen werden vorteilhafterweise so gewählt, dass eine nahezu feststofffreie flüssige Phase - die Proteinextraktlösung - erzielt wird.

Weiterhin bevorzugt ist, dass nach der Diafiltration aus Schritt c) eine Proteinlösung erhalten wird mit einem Proteinanteil in der Trockenmasse von mindestens 50%, bevorzugt mindestens 70%, besonders bevorzugt mindestens 80%. Es war völlig überraschend, dass durch das erfindungsgemäße Verfahren, solch hohe Ausbeuten an Proteinanteilen erzielt werden können. Bisher ging die Fachwelt davon aus, dass hierfür eine chemische Extraktion vor allem durch das Hinzufügen von Säure von Einstellen des isoelektrischen Punktes notwendig wäre.

Die Proteinextraktlösung wird nun auf der Ultrafiltrationsanlage gewaschen. Dabei wird bevorzugt die gleiche Menge Frischwasser zugeführt wie Permeat abgeführt wird. Diese auch als *Diafiltration* bezeichnete Prozessstufe dient dazu, die in der Proteinextraktlösung ebenfalls gelösten niedermolekularen Zucker und Alkaloide zu entfernen.

In einem bevorzugten Verfahren der Erfindung liegt das Proteinpräparat nach der Ultrafiltration aus Schritt d) in einer Proteinlösung mit mindestens 10%, bevorzugt mindestens 15%, besonders bevorzugt mindestens 20% Trockenmassengehalt vor. Es war völlig überraschend, dass das erfindungsgemäße Verfahren solch positiven Ergebnissen erzielen konnte.

Es ist besonders bevorzugt, dass das Verfahren ein kontinuierliches Verfahren ist. Ein weiterer Vorteil der Erfindung liegt in der Gestaltung des Verfahrens als kontinuierliches Verfahren. Im Stand der Technik sind keine kontinuierlichen Verfahren bekannt, was die Produktion zeitaufwendiger und kostenintensiver gestaltet.

Es ist besonders bevorzugt, dass alle Prozessstufen des Verfahrens so ausgerichtet sind, dass die native Struktur der Proteinfraktionen erhalten bleibt, indem die thermische Belastung zu jeder Zeit unter 55°C gehalten wird.

### Weiterhin bevorzugt ist, dass das Verfahren außerdem

### e) einen Pasteurisierungsschritt

umfasst. Es ist dabei bevorzugt, dass dieser Schritt bei 60° C bis 80°C, besonders bevorzugt 69° C erfolgt. Bevorzugt wird diese Temperatur für 1 bis 3 Minuten, besonders bevorzugt für 2 Minuten gehalten.

Bevorzugt ist, dass das Proteinpräparat anschließend verpackt wird. Es können unterschiedliche Verpackungsarten zum Einsatz kommen. Bevorzugt sind Kunststoffbecher, Vakuumbeutel, Standbeutel, Schlauchbeutel und/oder Verbundverpackungen.

Auch bevorzugt ist, dass das Proteinpräparat gekühlt, bevorzugt bei unter 0°C, besonders bevorzugt bei -20°C gelagert wird. Hierdurch wird die Haltbarkeit des Produktes verlängert und ein verfrühtes Ranzigwerden verhindert.

In einer weiteren bevorzugten Ausführungsform betrifft die Erfindung ein pflanzliches Proteinpräparat, bevorzugt ein Lupinenprotein-Extrakt, hergestellt nach einem zuvor beschriebenen Verfahren. Das erfindungsgemäße Produkt zeichnet sich durch die zuvor beschriebenen Vorteile aus und ist in geschmacklicher Hinsicht aber auch im Hinblick auf das Fehlen von toxischen Bestandteilen den Produkten aus dem Stand der Technik überlegen. Diese Vorteile werden durch das neue Herstellungsverfahren erzielt, wobei vor allem der Verzicht auf Säurezugabe sich positiv auf die Produkte auswirkt. Durch das schonende Extraktionsverfahren der Erfindung kann das funktionelle Profil des nativen Proteins in vollem Umfang erhalten bleibt.

In besonders bevorzugten Ausführungsform der Erfindung wird kein Proteinisolat hergestellt, da die Proteinkonzentration bevorzugt bei unter 90 % liegt. Es ist daher besonders bevorzugt, dass durch das erfindungsgemäße Verfahren ein Proteinkonzentrat erzeugt wird.

### Figuren und Beispiele

Im Folgenden wird das erfindungsgemäße Verfahren an Hand einer Figur und einem Beispiel näher erläutert. Es handelt sich dabei um eine bevorzugte Ausführungsform, die den Schutzbereich der Ansprüche nicht limitieren soll. Das Beispiel zeigt die Herstellung von Lupininprotein-Extrakten, kann aber auch auf anderen Pflanzensamen angewendet werden.

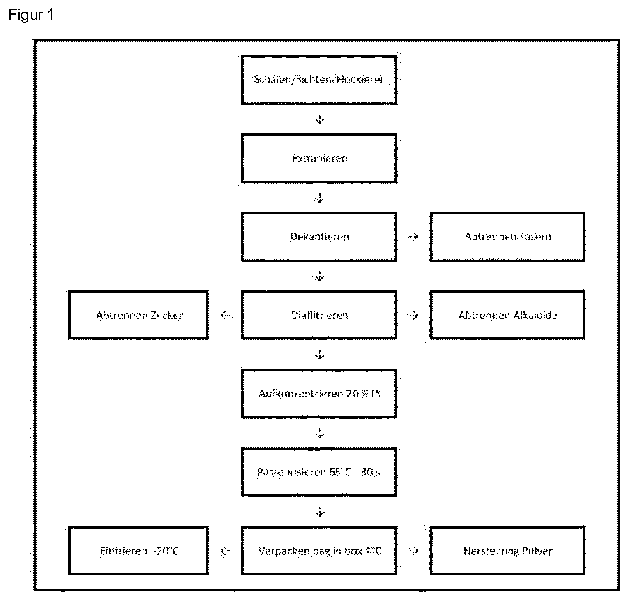

Figur 1 zeigt den schematischen Aufbau des Verfahrens in einer bevorzugten Ausführungsform. Das Verfahren umfasst die Schritte des Anlieferns der geschälten Rohware und das Einmaischen bei neutralem pH-Wert. Durch den Schritt des Dekantierens werden Faserbestandteile abgetrennt. Im Anschluss werden Alkaloide und Zuckerverbindungen durch Diafiltration abgetrennt. Es folgen das Aufkonzentrieren auf 20% Trockensubstanz sowie der Schritt des Pasteurisierens. Das Produkt wird im Anschluss bei 4° C verpackt und kann dann weiterverarbeitet oder bei -20° C gelagert werden.

### Prozessbeispiel:

### Saatenaufbereitung:

Eine Charge a 700 kg Lupinensamen (*Lupinus angustifolius* L.), aus kontrolliertem Anbau, GVOfrei, mit folgenden chemisch-physikalische Parametern
- Tausendkorngewicht (TKG) in [g]: 120 - 180
- Korndurchmesser [mm]: 3 - 7 mm
- Schalendicke [µm]: 100 - 230
- Schalenanteil [%]: 24 - 30
- Restfeuchte [%]: 12 - 14
- Fettgehalt [%]: 5 - 7
- Besatz < 2%
- Alkaloidgehalt < 0,02%
- Proteingehalt > 30%
wird auf einer speziellen Saatenaufbereitungsanlage folgenden Prozessstufen unterworfen:
1. Schälen mittels Prall- und/oder Unterläuferschälgang - Aufplatzen der Schale, Freisetzen der Kerne.
2. Trennen von Schalen und Kernen im Sichter unter Ausnutzung des unterschiedlichen spezifischen Gewichtes der beiden Fraktionen.
3. Pressen der Kerne zu Flocken mittels Walzenstuhl auf eine Schichtdicke von < 0,5 mm, so dass eine Schüttdichte von 38 bis 40 kg/hl (Hektolitergewicht = Masse je Hektoliter - Routineverfahren nach ISO 7971-3:2009) erreicht wird.
4. Alle Prozessstufen sind so ausgerichtet, dass die native Struktur der Proteinfraktionen erhalten bleiben, indem die thermische Belastung zu jeder Zeit unter 55°C gehalten wird
5. In diesem Beispiel werden aus 700 kg Lupinensamen 500 kg Flocken und 200 kg Schalen gewonnen.
500 kg Flocken sind das Ausgangsmaterial für einen Batch-Ansatz Protein-Extraktion.

### Proteinextraktion:

1. Die 500 kg Lupinenflocken werden im Verhältnis von 1:9 über den Anmaischebehälter mit Ytron-Leitstrahlmischer in 4.500 L Trinkwasser eingeweicht und im Rührwerksbehälter zu einer stabilen Suspension verrührt. Der Rührwerksbehälter verfügt über konische, geschlitzte Becherrührorgane, die ein schaumarmes Rühren bei geringer Umfangsgeschwindigkeit von ∼ 2,5 m/s gewährleisten.
2. Das Anmaischen erfolgt bei einer Wassertemperatur < 10°C, idealerweise bei 4°C. Der pH-Wert der Suspension wird durch Zugabe Natriumhydroxid neutral eingestellt. Die Dosierung beträgt 0,4% für c(NaOH)= 3 mol/l.
3. Die konusförmigen Rührorgane erzeugen eigendynamische Wirbelbewegungen. Diese bewirken durch das sogenannte Düsenprinzip eine zusätzliche Beschleunigung und Vermischung des Rührgutes. Durch das Staudruckprinzip, bei dem das Medium laminar durch die Verdränger strömt, erfolgt ein äußerst schonendes Rühren. Nach Erreichen einer homogenen Verteilung der Feststoffe und eines stabilen pH-Wert 7 wird die Suspension 60 min unter diesen Bedingungen gerührt. Die Proteinfraktionen gehen unter diesen Bedingungen in Lösung, werden somit aus den Zellen extrahiert.
4. Anschließend wird die Suspension über eine Vollmantelzentrifuge (Dekanter - hier Typ Foodec 400T) geleitet. Dabei werden Feststoff und proteinhaltige Flüssigkeit getrennt. Die Dekantereinstellungen sind so gewählt, dass eine nahezu feststofffreie (Sediment < 0,2%, Schleuderprobe) flüssige Phase - die Proteinextraktlösung - erzielt wird.
5. Die Proteinextraktlösung wird vom Dekanteraustritt in einen weiteren Tank mit konischen, geschlitzten Becherrührorganen geleitet. Die 5.000 kg Suspension teilen sich hierbei im Verhältnis 11/15 Anteil Flüssigkeit - das sind ∼ 3.700 L - und 4/15 Teile Feststoff (proteinhaltige Faser) - das sind ∼1.300 kg - auf.
6. Die Proteinextraktlösung wird nun auf der Ultrafiltrationsanlage (UF) "gewaschen", das heißt es wird der Proteinextraktlösung die gleiche Menge Frischwasser zugeführt wie Permeat abgeführt wird. Diese als *Diafiltration* bezeichnete Prozessstufe dient dazu, die in der Proteinextraktlösung ebenfalls gelösten niedermolekularen Zucker und Alkaloide zu entfernen. Der Prozess wird so geführt, dass sich im Feststoffanteil der Extraktlösung ein Proteingehalt > 80% einstellt.
7. Anschließend wird auf der gleichen UF- Anlage die Proteinextraktlösung auf einen Feststoffgehalt von 20% konzentriert. Das Permeat enthält noch Anteile an gelösten Zuckern und Alkaloiden, so dass der Proteingehalt weiter ansteigt. Es werden ca. 720 kg 20%ige Proteinextraktlösung erzielt.
8. Die 720 kg Proteinextraktlösung werden dann auf einer Kurzzeit-Erhitzungsanlage (KZE) entsprechend den lebensmittelrechtlichen Vorschriften pasteurisiert, um pathogene d. h. krankheitserregende Keime abzutöten. Anschließend wird das Produkt sofort auf 5°C herunter gekühlt. Das Temperatur-Zeit-Regime wird so geführt, dass das funktionelle Profil des nativen Proteins in vollem Umfang erhalten bleibt.
9. Die auf 5°C gekühlte Proteinextraktlösung wird dann auf einem Bag-in-Box-Abfüller in 10kg-Boxen - hier 72 Stück- abgefüllt und zur Frostung auf -20°C eingelagert.

## Patentansprüche

1. Verfahren zur Herstellung eines pflanzlichen Proteinpräparates umfassend zumindest die folgenden Schritte:
f) Einmaischen geschälter Pflanzensamen,
g) Dekantieren der so erhaltenen Maische zum Abtrennen von Pflanzenfasern,
h) Abtrennen von Alkaloiden und niedermolekularen Zuckern durch Diafiltration,
i) Aufkonzentrieren der so erhaltenen Proteinlösung mittels Ultrafiltration.

2. Verfahren nach Anspruch 1, wobei
das pflanzliche Proteinpräparat ein Lupinenprotein-Extrakt ist und die Pflanzensamen Lupinensamen sind.

3. Verfahren nach Anspruch 1 oder 2, **dadurch gekennzeichnet, dass**
die geschälten Pflanzensamen vor dem Einmaischen aus Schritt a) zerkleinert werden.

4. Verfahren nach mindestens einem der vorhergehenden Ansprüche, **dadurch gekennzeichnet, dass**
in dem Verfahren keine Säuren hinzugegeben werden.

5. Verfahren nach mindestens einem der vorhergehenden Ansprüche, **dadurch gekennzeichnet, dass**
der Schritt a) des Einmaischens
aa) Einweichen in Wasser und
bb) Verrühren
umfasst.

6. Verfahren nach mindestens einem der vorhergehenden Ansprüche, **dadurch gekennzeichnet, dass**
die Pflanzensamen in Schritt aa) in Wasser eingeweicht werden, mit einem Mischungsverhältnis von Feststoff zu Wasser von 1:5 - 1:12, bevorzugt 1:6 - 1:10, besonders bevorzugt 1:8.

7. Verfahren nach mindestens einem der vorhergehenden Ansprüche, **dadurch gekennzeichnet, dass**
das Einweichen in Schritt aa) bei einer Temperatur von 2°C - 10°C, bevorzugt 3°C - 6°C, besonders bevorzugt 4°C stattfindet.

8. Verfahren nach mindestens einem der vorhergehenden Ansprüche, **dadurch gekennzeichnet, dass**
der pH-Wert der Mischung aus Wasser und geschälten Pflanzensamen auf im Wesentlichen pH 7 eingestellt wird.

9. Verfahren nach mindestens einem der vorhergehenden Ansprüche, **dadurch gekennzeichnet, dass**
nach der Diafiltration aus Schritt c) eine Proteinlösung erhalten wird mit einem Proteinanteil in der Trockenmasse von mindestens 50%, bevorzugt mindestens 70%, besonders bevorzugt mindestens 80%.

10. Verfahren nach mindestens einem der vorhergehenden Ansprüche, **dadurch gekennzeichnet, dass**
das Proteinpräparat nach der Ultrafiltration aus Schritt d) in einer Proteinlösung mit mindestens 10%, bevorzugt mindestens 15%, besonders bevorzugt mindestens 20% Trockenmassengehalt vorliegt.

11. Verfahren nach mindestens einem der vorhergehenden Ansprüche, **dadurch gekennzeichnet, dass**
das Verfahren ein kontinuierliches Verfahren ist.

12. Verfahren nach mindestens einem der vorhergehenden Ansprüche, **dadurch gekennzeichnet, dass**
das Verfahren außerdem
j) einen Pasteurisierungsschritt
umfasst.

13. Verfahren nach mindestens einem der vorhergehenden Ansprüche, **dadurch gekennzeichnet, dass**
das Proteinpräparat anschließend verpackt wird.

14. Verfahren nach mindestens einem der vorhergehenden Ansprüche, **dadurch gekennzeichnet, dass**
das Proteinpräparat bei bevorzugt -20°C gelagert wird.

15. Pflanzliches Proteinpräparat, bevorzugt Lupinenprotein-Extrakt hergestellt nach einem Verfahren gemäß mindestens einem der vorherigen Ansprüche.
